# EUROPEAN PATENT SPECIFICATION

(11) **EP 1 813 504 B1**
(45) Date of publication and mention of the grant of the patent: **29.04.2009**
(21) Application number: 06251207.4
(22) Date of filing: 07.03.2006
(51) Int. Cl.: B62D 1/16, F16H 1/28

(54) **Variable gear ratio steering appartus for an automobile**
Lenkanlage mit variablen Übersetzungsverhältnis für ein Kraftfahrzeug
Dispositif de direction à transmission variable pour un automobile

(30) Priority: 27.01.2006 KR 2006009016
(43) Date of publication of application: 01.08.2007
(73) Proprietor: Mando Corporation, Pyeongtaek-si, Gyeonggi-do (KR)
(72) Inventor: Choi, Jung-rak, Yongin-si Gyeonggi-do (KR); Kim, Byoungkuk, Songpa-gu, Seoul (KR)
(74) Representative: Neobard, William John

(56) References cited:
- WO-A-20/04051116
- DE-A1- 3 225 950
- DE-A1- 10 036 937
- GB-A- 1 435 881
- US-A- 4 799 396

## Description

The present invention relates to a variable gear ratio steering apparatus for an automobile.

Embodiments relate to a variable gear ratio steering apparatus for an automobile having a planetary gear system including a sun gear, a first carrier, and a second carrier inserted into the first carrier while being supported by a compression means so that the second carrier can make a relative rotation about the sun gear, in order to reduce the backlash.

As generally known in the art, a planetary gear system includes a sun gear, a planet gear externally meshing with the sun gear while being supported by a carrier, and a ring gear internally meshing with the planet gear. The planetary gear system may have a simpler structure, if necessary. The sun, planet, and ring gears may act as stationary, input, and output members, respectively, so that the reduction ratio (or overdrive ratio) can be easily varied. For these reasons, planetary gear systems are used in various apparatuses, particularly variable gear ratio steering apparatuses for automobiles.

In planetary gear systems, a backlash exists between cogs of the sun gear and cogs of the planet gear, as well as between cogs of the planet gear and cogs of the ring gear.

The term "backlash" refers to a gap between adjacent cogs, more particularly, a space created behind meshing cogs when cogs of a gear mesh with cogs of another gear.

Meanwhile, in the case of a gear system having driving and following gears meshing with each other, there is no problem when the speed of the driving and following gears is constant. However, when the speed is not constant for some reasons, the backlash may generate noise.

This is because before cogs of the driving gear completely disengage from cogs of the following gear, other cogs of the following gear collide with rear portions of cogs of the driving gear and generate noise.

The noise resulting from the backlash in a steering apparatus of an automobile may cause discomfort during steering and worsens as cogs wear down more and more.

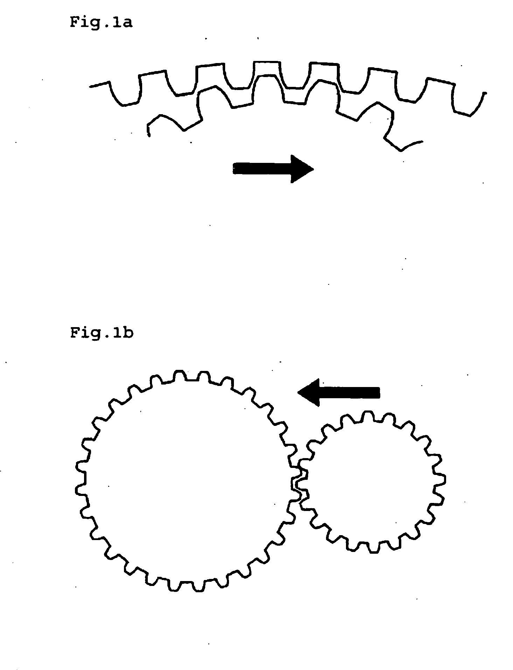

Conventional methods for reducing the backlash include a static method, as shown in FIG. 1a, of moving gears, the distance between centers of which is fixed, in the axial or diametrical direction and fixing the distance between centers; a method of adjusting the distance between centers and fixing it; and a dynamic method, as shown in FIG. 1b, of adjusting the distance between centers by means of elastic force of an elastic body.

However, such conventional methods have a problem in that it is impossible to apply them to planetary gear systems. This is because, if the distance between centers of the sun and planet gears is reduced to decrease the backlash between them, the backlash between the planet and ring gears increases. On the other hand, if the distance between axes of the planet and ring gears is reduced to decrease the backlash between them, the backlash between the sun and planet gears increases.

In summary, it is impossible to reduce both the backlash between the sun and planet gears and that between the planet and ring gears according to the prior art.

A prior art document, US-A-4799396 relates to a reduction gear having an output shaft supporting two planet gears engaging an internal gear fixed to a housing, and a pinion gear on the input shaft. Supports on the output shaft are movable respectively to deal with backlash. The gear is applied to speed reduction of a high speed electric motor.

It is an object of the invention to at least partly avoid problems of the prior art.

The invention is recited in the accompanying claims.

Embodiments of the present invention will now be described, by way of example only, with reference to the accompanying drawings, in which:
FIGs. 1a and 1b briefly show conventional methods for reducing the backlash, respectively;
FIG. 2 is a perspective view showing a planetary gear system embodying the present invention;
FIGs. 3a and 3b are sectional views showing a planetary gear system embodying the present invention, when a backlash exists and when the backlash is reduced, respectively;
FIG. 4 is a partial sectional view showing a variable gear ratio steering apparatus for an automobile embodying the present invention;
FIG. 5 is an exploded perspective view showing major parts of a variable gear ratio steering apparatus for an automobile embodying the present invention;
FIGs. 6a and 6b are sectional views taken along line A-A of FIG. 4; and
FIGs. 7a and 7b are sectional views taken along line B-B of FIG. 4.

In the following description and drawings, like reference signs indicate like parts.

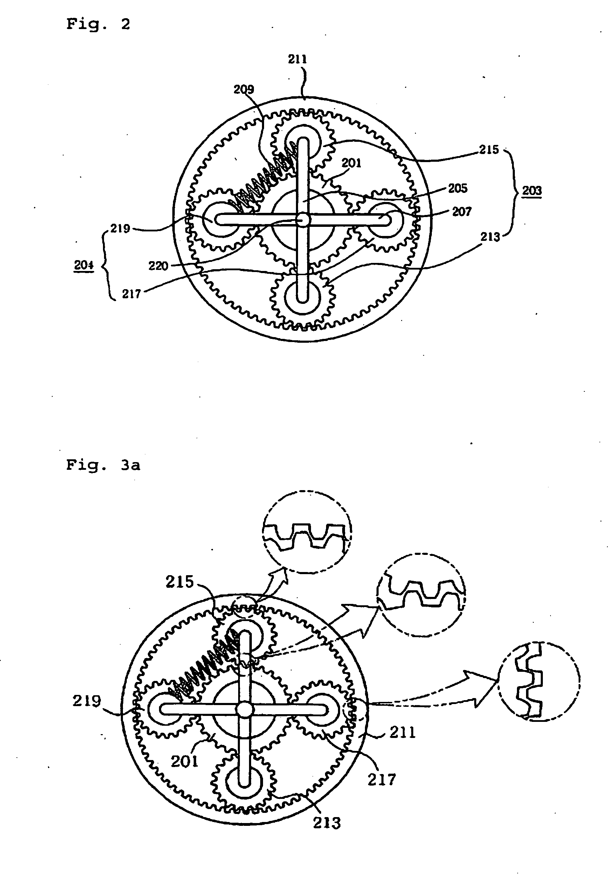

Referring to FIG. 2, a planetary gear system includes a sun gear 201; a first pair of planet gears 203; a second pair of planet gears 204; a first link 205; a second link 207; an elastic member 209; and a ring gear 211.

The first pair of planet gears 203 include first and second planet gears 213 and 215, and the second pair of planet gears 204 include third and fourth planet gears 217 and 219. If necessary, the planetary gear system may include only three planet gears without the fourth planet gear 219. Alternatively, the system may include at least one additional planet gear.

The first link 205 connects the first and second planet gears 213 and 215 to each other, and the second link 207 connects the third and fourth planet gears 217 and 219 to each other. The middle portion of the second link 207 is connected to the first link 205 via a coupling pin 220 so that the second link can rotate relative to the first link.

When fewer planet gears are used, e.g. when the fourth planet gear 219 is omitted, an end of the second link 207 is connected to the third planet gear 217 and the other end thereof is connected to the first link 205 in such a manner that it can rotate relative to the first link 205.

The elastic member 209 is made of a tensile or compression spring, for example, and is positioned between the first and second links 205 and 207 so that they can be moved towards or away from each other.

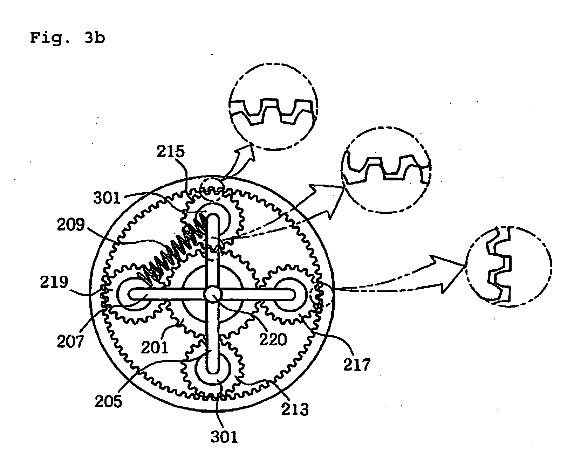

The process of reducing the backlash in the planetary gear system of Fig 2 will now be described with reference to FIGS. 3a and 3b.

It is assumed that, as shown in FIG. 3a, a backlash initially exists between the sun gear 201 and the first and second planet gears 213 and 215, as well as between the sun gear 201 and the third and fourth planet gears 217 and 219. In addition, a backlash also exists between the ring gear 211 and the first and second planet gears 213 and 215, as well as between the ring gear 211 and the third and fourth planet gears 217 and 219.

When the elastic force of the elastic member 209 acts on the first and second links 205 and 207 and rotates the first link 205 clockwise about the coupling pin 220, as shown in FIG. 3b; the first and second planet gears 213 and 215 revolve while spinning clockwise about respective rotation shafts 301. As a result, cogs of the first and second planet gears 213 and 215 mesh with cogs of the ring gear 211.

More particularly, cogs of the first and second planet gears 213 and 215, which have disengaged from cogs on opposite sides of the ring gear 211, come to mesh with cogs on one side of the ring gear 211, when the first and second planet gears 213 and 215 rotate clockwise as a result of clockwise rotation of the first link 205. In addition, cogs of the first and second planet gears 213 and 215, which have disengaged from cogs on opposite sides of the sun gear 201, come to mesh with cogs on one side of the sun gear 201 as a result of clockwise rotation.

When the second link 207 makes a relative rotation in the counterclockwise direction, cogs of the third and fourth planet gears 217 and 219 mesh with cogs on one side of the sun and ring gears 201 and 211, respectively.

It is to be noted that cogs of the first and second planet gears 213 and 215 mesh with cogs of the sun and ring gears 201 and 211 in the clockwise direction about the rotation shafts 301, while cogs of the third and fourth planet gears 217 and 219 mesh with cogs of the sun and ring gears 201 and 211 in the counterclockwise direction.

Therefore, when the sun gear 201 rotates clockwise, cogs of the sun gear 201 mesh with cogs of the first and second planet gears 213 and 215 sooner than cogs of the third and fourth planet gears 217 and 219 and rotate accordingly. This guarantees smooth and robust meshing and avoids noise resulting from a backlash.

When the sun gear 201 rotates counterclockwise, cogs of the sun gear 201 mesh with cogs of the third and fourth planet gears 217 and 219 sooner than cogs of the first and second planet gears 213 and 215 and rotate accordingly.

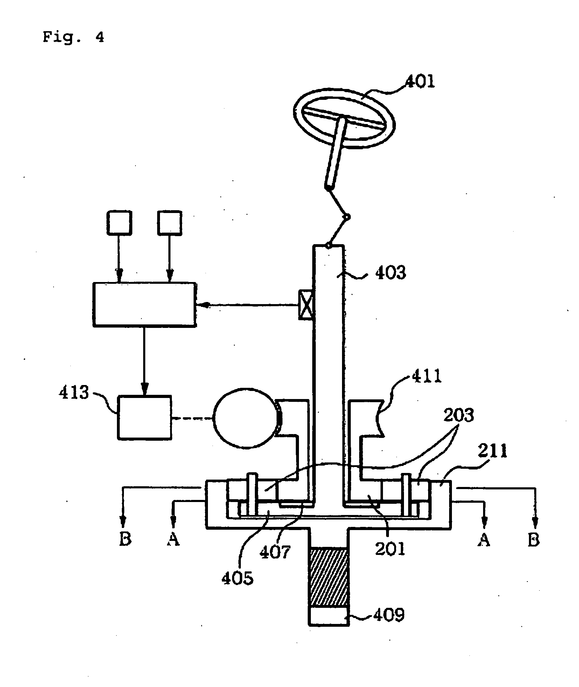

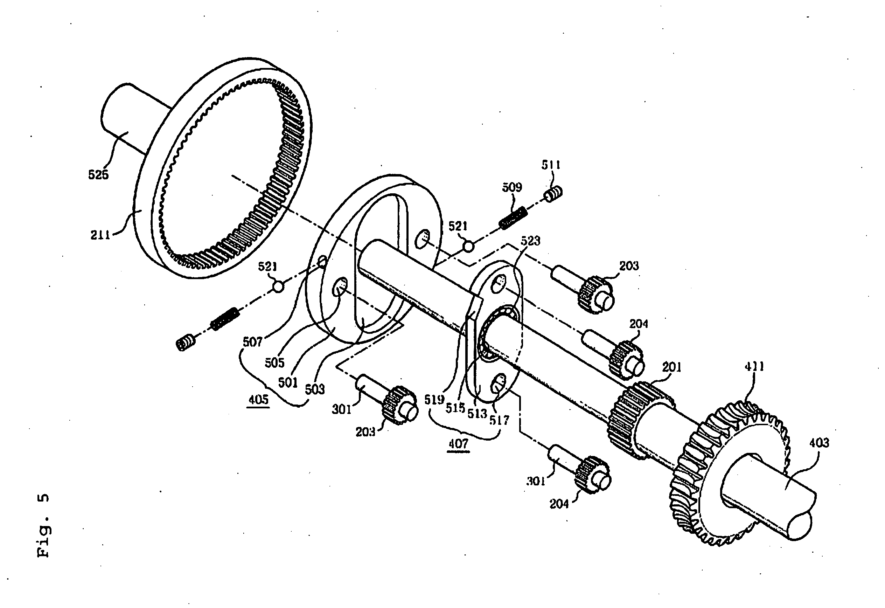

As shown in FIGs. 4 and 5, a variable gear ratio steering apparatus for an automobile includes an input shaft 403 connected to a steering wheel 401; a sun gear 201 coaxially formed with the input shaft 403 to enclose it; first and second pairs of planet gears 203 and 204 externally meshing with the sun gear 201; a first carrier 405 connected to the input shaft 403 to connect the first pair of planet gears 203 to each other; a second carrier 407 adapted to rotate relative to the input shaft 403 while connecting the second pair of planet gears 204 to each other; a ring gear 211 internally meshing with the first and second pairs of planet gears 203 and 204; and an output shaft 409 connected to the ring gear 211.

The input shaft 403 has an upper end connected to the steering wheel 401 and a lower end fixedly connected to the first carrier 405, as will be described later. When the driver rotates the steering wheel 401, the input shaft 403 and the first carrier 405 rotate accordingly.

The sun gear 201 is coaxially formed with the input shaft 403 to enclose it. If necessary, the sun gear 201 may have a worm wheel 411 formed on the top thereof, in order to receive power from various actuators, including a motor 413.

The first carrier 405 includes a first carrier body 501, a mounting groove 503, first coupling holes 505, and insertion holes 507.

The first carrier body 405 has the shape of a disk with a predetermined diameter and preferably has an overall thickness larger than that of the second carrier 407 so that the second carrier 407 can be inserted into the first carrier 405, but the relative size is not limited to that herein. The lower end of the input shaft 403 is fixedly coupled to the center of the first carrier body 405 so that the first carrier 405 rotates together with rotation of the input shaft 403.

The mounting groove 503 extends a predetermined distance from the center of the first carrier body 501 with a predetermined depth so that the second carrier 407 can be inserted into the first carrier 405. The mounting groove 503 has a width larger than that of the second carrier 407 so that the second carrier 407, when inserted into the mounting groove 503, can rotate about the input shaft 403 relative to the first carrier 405 in a space created by the difference in width.

The first coupling holes 505 are formed on the first carrier body 501 and face each other about the input shaft 403 so that the rotation shafts 301 of the first pair of planet gears 203 are inserted therein, respectively. Preferably, bearings may be positioned between the inner peripheral surface of the first coupling holes 505 and the outer peripheral surface of the rotation shafts 301 of the first pair of planet gears 203.

The insertion holes 507 extend from one side of the inner peripheral surface of the mounting grooves 503 in the outward direction. Compression springs 509 are inserted into the insertion holes 507 in such a manner that an end of the compression springs 509 makes contact with the second carrier 407. The compression springs 509 apply pressure to the second carrier 407 so that it can rotate relative to the first carrier 405. If necessary, the compression springs 509 may be replaced with any elastic substance, including rubber and synthetic rubber.

In this embodiment, steel balls 521 are positioned between the compression springs 509 and the second carrier 407, in order to prevent the compression springs 509 from being worn down by friction between an end of the compression springs 509 and the second carrier 407, as well as maintain stable contact between the compression springs 509 and the second carrier 407 regardless of external impact.

In order to ensure a sufficient length of the compression springs 509, the insertion holes 507 are preferably slanted relative to a virtual line connecting the first coupling holes 505, rather than being parallel to it.

The insertion holes 507 have female screws formed on their inner peripheral surface and are provided with adjustment means 511, which have male screws formed on its end to engage with the female screws. The adjustment means 511 are used to adjust the degree of compression of the compression springs 509 and the resulting pressure acting on the second carrier 407. The adjustment means 511 in this embodiment are headless wrench bolts, but the type is not limited to that herein.

The second carrier 407 includes a second carrier body 513, an input shaft through-hole 515, and second coupling holes 517.

The second carrier body 513 is an elongated plate with a predetermined thickness. The second carrier body 513 has an input shaft through-hole 515 formed at the center thereof, through which the input shaft 403 extends through for coupling, and second coupling holes 517 spaced a predetermined distance from the center of the input shaft through-hole 515 in the vertical direction so that the rotation shafts 301 of the second pair of planet gears 204 are inserted therein, respectively.

The second carrier body 513 has V-shaped recesses 519 formed on the outer peripheral surface thereof, and the steel balls 521 are positioned between an end of the compression springs 509 and the recesses 519, respectively. If necessary, the steel balls 521 may be replaced with another type of media made of plastic or ceramic, for example, in a shape other than a sphere.

The input shaft through-hole 515 is formed at the center of the second carrier 513, and bearing 523 are preferably positioned between the inner peripheral surface of the input shaft through-hole 515 and the outer peripheral surface of the input shaft 403.

The second coupling holes 517 are spaced a predetermined distance from the center of the second carrier body 513 in the vertical direction so that the rotation shafts 301 of the second pair of planet gears 204 are inserted therein, respectively. If necessary, bearings may be positioned between the inner peripheral surface of the second coupling holes 517 and the outer peripheral surface of the rotation shafts 301 of the second pair of planet gears 204.

The first and second pairs of planet gears 203 and 204 mesh with the inner peripheral surface of the ring gear 211, and an output shaft 525 is coupled to the lower end of the ring gear 211. If necessary, the output shaft 525 may be integrally formed with the ring gear 211.

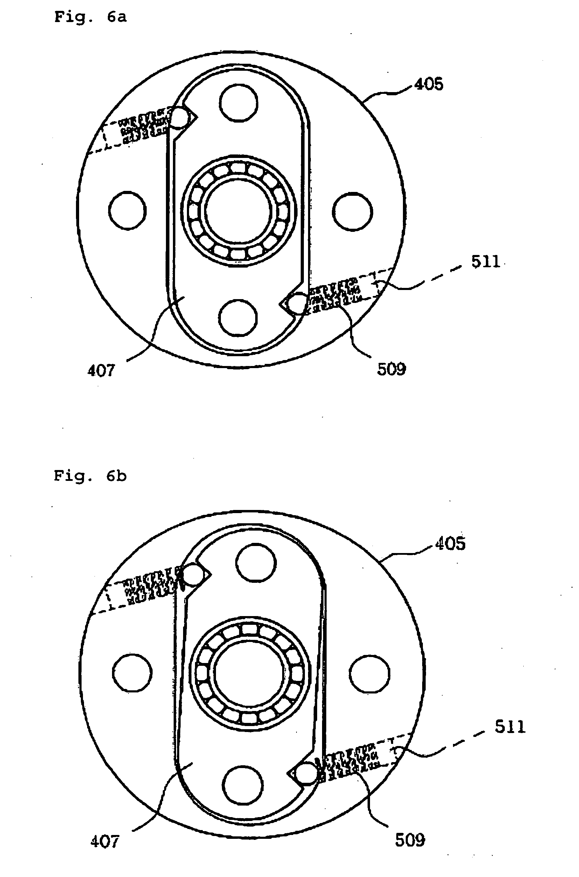

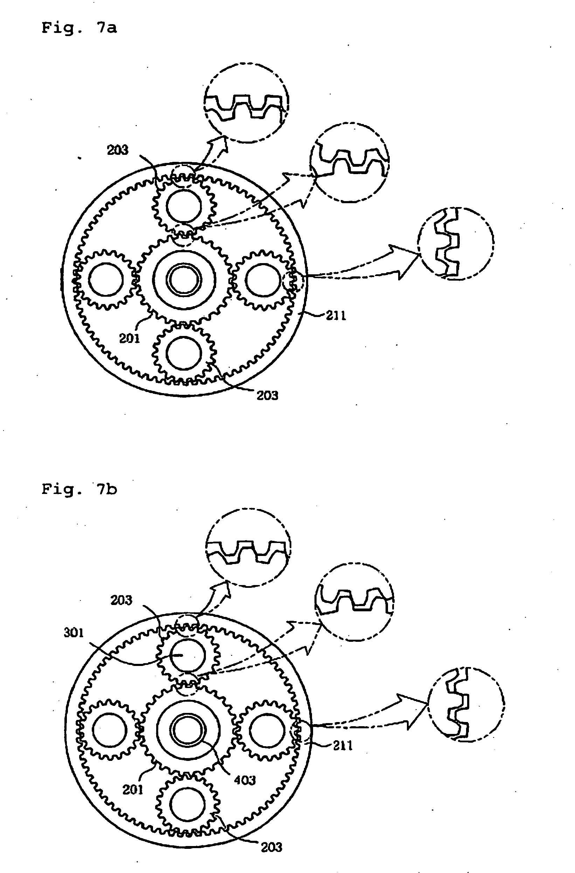

The operation of the variable gear ratio steering apparatus of the second embodiment will now be described with reference to FIGs. 6a, 6b, 7a, and 7b.

It is assumed that, as shown in FIGs. 6a and 7a, a backlash exits between the sun gear 201 and the first pair of planet gears 203, as well as between the first pair of planet gears 203 and the ring gear 211.

When the adjustment means 511 are rotated to apply pressure to the compression springs 509, as shown in FIGs. 6b and 7b, the second carrier 407 rotates clockwise about the input shaft 403. As a result, cogs of the first pair of planet gears 203 mesh with cogs on one side of the ring gear 211.

More particularly, cogs of the first pair of planet gears 203, which have disengaged from cogs on opposite sides of the ring gear 211, come to mesh with cogs on one side of the ring gear 211, when the first pair of planet gears 203 revolve while spinning clockwise as a result of clockwise rotation of the second carrier 407. In addition, cogs of the first pair of planet gears 203, which have disengaged from cogs on opposite sides of the sun gear 201, move in the clockwise direction and mesh with cogs on one side of the sun gear 201, when the first pair of planet gears 203 rotate clockwise.

Therefore, when the sun gear 201 rotates clockwise, cogs of the sun gear 201 mesh with cogs of the first pair of planet gears 203 before cogs of the second pair of planet gears 204 and rotate accordingly. This avoids noise resulting from a backlash, as has been described in detail with reference to the first embodiment.

As mentioned above, the variable gear ratio steering apparatus for an automobile according to the present invention has a second carrier inserted into a first carrier while being supported by a compression means so that the second carrier can make a relative rotation about an input shaft. This reduces backlash.

Although embodiments of the present invention have been described for illustrative purposes, those skilled in the art will appreciate that various modifications, additions and substitutions are possible, without departing from the scope of the invention.

## Claims

1. A variable gear ratio steering apparatus for an automobile comprising:
an input shaft for connection to a steering wheel;
a sun gear (201) coaxial with the input shaft while enclosing the input shaft; and
a first pair of planet gears (203) externally meshing with the sun gear;
**characterized by** further comprising:
a second pair of planet gears (204) externally meshing with the sun gear;
a first carrier (205) coupled to the input shaft while connecting the first pair of planet gears;
a second carrier (207) adapted to rotate relative to the input shaft while connecting the second pair of planet gears; wherein the first and second carriers (205), (207) are connected together by elastic means and
a ring gear (211) for connection to an output shaft, the ring gear (211) internally meshing with the first and second pairs of planet gears.

2. A variable gear ratio steering apparatus for an automobile according to claim 1, wherein a mounting groove (503) is formed on the first carrier (205), and the second carrier (207) is inserted into the mounting groove(503).

3. A variable gear ratio steering apparatus for an automobile according to claim 2, wherein the first carrier (205) has a compression means (509), and the compression means is configured to apply a predetermined pressure to the second carrier (207).

4. A variable gear ratio steering apparatus for an automobile according to claim 3, wherein the first carrier (205) has an insertion hole (507) extending from an inner peripheral surface of the mounting groove (503) to an outer peripheral surface of the mounting groove, and the compression means (509) is disposed in the insertion hole.

5. A variable gear ratio steering apparatus for an automobile according to claim 3, wherein a recess is formed on an outer peripheral surface of the second carrier (207) with a predetermined depth, and a steel ball (521) is positioned between the compression means and the recess.

6. A variable gear ratio steering apparatus for an automobile according to claim 4, wherein the insertion hole (507) is adapted to communicate with an outside of the carrier, a female screw is formed on an inner peripheral surface of the insertion hole (507), and an adjustment means is provided with a male screw engaging with the female screw.

7. A variable gear ratio steering apparatus for an automobile according to claim 6, wherein the compression means is an elastic body.

## Patentansprüche

1. Lenkvorrichtung mit variabler Übersetzung für ein Fahrzeug, mit:
einer Eingangswelle zur Verbindung mit einem Lenkrad;
einem Sonnenrad (201), das koaxial zur Eingangswelle vorgesehen ist, während es die Eingangswelle umgibt; und
einem ersten Paar Planetenräder (203), die außen in das Sonnenrad eingreifen;
**dadurch gekennzeichnet, dass** sie weiters umfasst:
ein zweites Paar Planetenräder (204), die außen in das Sonnenrad eingreifen;
einen ersten Träger (205), der an die Eingangswelle gekuppelt ist, wobei er das erste Paar Planetenräder verbindet;
einen zweiten Träger (207), der eingerichtet ist, um sich relativ zur Eingangswelle zu drehen, während er das zweite Paar Planetenräder verbindet;
wobei die ersten und zweiten Träger (205), (207) über elastische Mittel miteinander verbunden sind, und
einen Zahnkranz (211) zur Verbindung mit einer Ausgangswelle, wobei der Zahnkranz (211) innen mit dem ersten und zweiten Paar Planetenräder im Eingriff steht.

2. Lenkvorrichtung mit variabler Übersetzung für ein Fahrzeug nach Anspruch 1, wobei eine Befestigungsnut (503) auf dem ersten Träger (205) gebildet ist, und wobei der zweite Träger (207) in die Befestigungsnut (503) eingesetzt ist.

3. Lenkvorrichtung mit variabler Übersetzung für ein Fahrzeug nach Anspruch 2, wobei der erste Träger (205) ein Kompressionsmittel (509) aufweist, und wobei das Kompressionsmittel eingerichtet ist, um einen vorbestimmten Druck auf den zweiten Träger (207) auszuüben.

4. Lenkvorrichtung mit variabler Übersetzung für ein Fahrzeug nach Anspruch 3, wobei der erste Träger (205) eine Einsetzöffnung (507) aufweist, die sich von einer inneren Umfangsfläche der Befestigungsnut (503) zu einer äußeren Umfangsfläche der Befestigungsnut erstreckt, und wobei das Kompressionsmittel (509) in der Einsetzöffnung angeordnet ist.

5. Lenkvorrichtung mit variabler Übersetzung für ein Fahrzeug nach Anspruch 3, wobei eine Vertiefung auf einer äußeren Umfangsfläche des zweiten Trägers (207) mit einer vorbestimmten Tiefe gebildet ist, und wobei eine Stahlkugel (521) zwischen dem Kompressionsmittel und der Vertiefung vorgesehen ist.

6. Lenkvorrichtung mit variabler Übersetzung für ein Fahrzeug nach Anspruch 4, wobei die Einsetzöffnung (507) eingerichtet ist, um mit einer Außenseite des Trägers zu kommunizieren, wobei eine Schraubenmutter auf einer inneren Umfangsfläche der Einsetzöffnung (507) gebildet ist, und wobei ein Einstellmittel mit einem Außengewinde vorgesehen ist, das in die Schraubenmutter eingreift.

7. Lenkvorrichtung mit variabler Übersetzung für ein Fahrzeug nach Anspruch 6, wobei das Kompressionsmittel ein elastischer Körper ist.

## Revendications

1. Appareil de direction à rapport d'engrenage variable pour une automobile comprenant :
un arbre d'entrée pour une connexion à un volant de direction ;
une roue planétaire (201) coaxiale avec l'arbre d'entrée tout en entourant l'arbre d'entrée ; et
une première paire de roues satellites (203) s'engrenant extérieurement avec la roue planétaire ;
**caractérisé en ce qu'**il comprend en outré :
une seconde paire de roues satellites (204) s'engrenant extérieurement avec la roue planétaire ;
un premier support (205) couplé à l'arbre d'entrée tout en connectant la première paire de roues satellites ;
un second support (207) adapté pour tourner par rapport à l'arbre d'entrée tout en connectant la seconde paire de roues satellites ;
dans lequel les premier et second supports (205, 207) sont connectés l'un à l'autre par un moyen élastique et
une couronne dentée (211) pour une connexion à un arbre de sortie, la couronne dentée (211) s'engrenant intérieurement avec les première et seconde paires de roues satellites.

2. Appareil de direction à rapport d'engrenage variable pour une automobile selon la revendication 1, dans lequel une rainure de montage (503) est formée sur le premier support (205), et le second support (207) est inséré dans la rainure de montage (503).

3. Appareil de direction à rapport d'engrenage variable pour une automobile selon la revendication 2, dans lequel le premier support (205) possède un moyen de compression (509), et le moyen de compression est configuré pour appliquer une pression prédéterminée sur le second support (207).

4. Appareil de direction à rapport d'engrenage variable pour une automobile selon la revendication 3, dans lequel le premier support (205) possède un orifice d'insertion (507) s'étendant à partir d'une surface périphérique intérieure de la rainure de montage (503) jusqu'à une surface périphérique extérieure de la rainure de montage, et le moyen de compression (509) est disposé dans l'orifice d'insertion.

5. Appareil de direction à rapport d'engrenage variable pour une automobile selon la revendication 3, dans lequel un évidement est formé sur une surface périphérique extérieure du second support (207) avec une profondeur prédéterminée, et une bille en acier (521) est positionnée entre le moyen de compression et l'évidement.

6. Appareil de direction à rapport d'engrenage variable pour une automobile selon la revendication 4, dans lequel l'orifice d'insertion (507) est adapté pour communiquer avec une partie extérieure du support, une vis femelle est formée sur une surface périphérique intérieure de l'orifice d'insertion (507), et un moyen de réglage est pourvu d'une vis mâle entrant en prise avec la vis femelle.

7. Appareil de direction à rapport d'engrenage variable pour une automobile selon la revendication 6, dans lequel le moyen de compression est un corps élastique.
